**Europäisches Patentamt**

**European Patent Office**

**Office européen des brevets**

(11) Veröffentlichungsnummer: **0 084 083**
**B1**

(19)

(12) **EUROPÄISCHE PATENTSCHRIFT**

(45) Veröffentlichungstag der Patentschrift:
**18.05.88**

(51) Int. Cl.⁴: **B 23 H 1/08**

(21) Anmeldenummer: **82108594.3**

(22) Anmeldetag: **29.09.82**

(54) Drahtführungseinrichtung für elektroerosive Bearbeitungsmaschinen.

(30) Priorität: **04.01.82 CH 6/82**

(43) Veröffentlichungstag der Anmeldung:
**27.07.83 Patentblatt 83/30**

(45) Bekanntmachung des Hinweises auf die Patenterteilung:
**18.05.88 Patentblatt 88/20**

(84) Benannte Vertragsstaaten:
**AT BE CH DE FR GB IT LI LU NL SE**

(56) Entgegenhaltungen:
**WO-A-80/02395**

(73) Patentinhaber: **Erowa AG, Winkelstrasse 8, CH-5734 Reinach (CH)**

(72) Erfinder: **Schneider, Rudolf, Gondiswinkel, CH-5734 Reinach (DE)**

(74) Vertreter: **Rottmann, Maximilian R., c/o Rottmann, Quehl & Zimmermann AG Glattalstrasse 37, CH-8052 Zürich (CH)**

## Beschreibung

Die Erfindung bezieht sich auf eine Drahtführungseinrichtung für elektroerosive Bearbeitungsmaschinen, nach dem Oberbegriff von Anspruch 1. Draht-Erosionsmaschinen mit solchen Drahtführungseinrichtungen ermöglichen die Herstellung von allgemein-zylindrischen und -konischen Werkstückformen in vielfältigen Abwandlungen und Kombinationen.

Eine Drahtführungseinrichtung der vorgenannten Art ist bekannt aus der Zeitschrift "precision", 10/81, S. 49 - 57, insbesondere S. 51. Danach ist vorgeschlagen, die beiden einander gegenüberliegenden Drahtführungen mit unabhängigen, kardanischen Bewegungsantrieben sowie einer Synchronisationskoppelung zu versehen. Eine solche Synchronsteuerung der Drahtführungs-Winkeleinstellung ist mit erheblichem Aufwand verbunden.

Aufgabe der Erfindung ist daher die Schaffung einer Drahtführungseinrichtung für elektroerosive Bearbeitungsmaschinen, die sich durch einfachen und mit vergleichsweise geringem Aufwand zu verwirklichenden Aufbau bei zuverlässiger Wirkungsweise auszeichnet. Die erfindungsgemässe Lösung dieser Aufgabe kennzeichdurch die Mermale des kennzeichnenden Teils des Anspruchs 1.

Das somit erfindungsgemäss vorgesehene Führungsglied, welches die Drahtführungs-Tragorgane miteinander verbindet, stellt sich bei jeglicher Relativbewegung dieser Tragorgane gegeneinander, sei es in Längs-, Quer- oder Höhenrichtung, selbsttätig entsprechend der veränderlichen Winkelstellung der Verbindungslinie zwischen den Drahtführungen ein und stellt somit jederzeit die Soll-Winkellage für die Achsen der beiden Drahtführungen dar. Dieses Führungsglied kann vorteilhaft einfach ausgebildet werden, beispielsweise als zylindrischer Führungsstift, und mit einer hohen Verformungssteifheit versehen werden, so dass in Verbindung mit der ohne weiteres erreichbaren Spielfreiheit der zugehörigen Schwenklager des Führungsgliedes an den Tragorganen eine hohe Einstellgenauigkeit gewährleistet ist. Diese Einstellgenauigkeit gilt ferner auch für die Drahtführungen selbst, indem die Winkellage des Führungsgliedes durch Schwenk-Koppelgetriebe unmittelbar auf die schwenkbar gelagerten Drahtführungen übertragen wird.

Für diese Schwenk-Koppelgetriebe kommen ebenfalls einfache und leicht verformungssteif auszubildende Konstruktionen an sich üblicher Art in Betracht, so dass sich insgesamt ein robuster und zuverlässiger Aufbau der Drahtführungseinrichtung ergibt.

In vorteilhafter Ausgestaltung der Erfindung wird das Führungsglied gegenüber den Drahtführungen versetzt ausserhalb des Werkstück-Bearbeitungsraumes angeordnet. Dabei wird der Versetzungsabstand durch die Schwenk-Koppelgetriebe überbrückt. Auf diese Weise lässt sich eine einwandfreie Drahtführungs-Winkeleinstellung auch für grosse Ausladungen der Tragorgane ohne Beeinträchtigung des freien Werkstück-Bearbeitungsraumes durch das Führungsglied und die Koppelgetriebe erreichen.

Für eine einfache Berücksichtigung der Änderung des gegenseitigen Abstandes der Drahtführungen bei jeder Relativbewegung derselben wird das Führungsglied teleskopartig ausgebildet oder mit mindestens einem der Drahtführungs-Tragorgane in seiner Längsrichtung verschiebbar verbunden. Dies ermöglicht auf einfache Weise relativ grosse Verstellhübe der Drahtführungen gegeneinander.

Die Schwenklagerung des Führungsgliedes an den Tragorganen wird zweckmässig gleichartig zur Schwenklagerung der Drahtführungen selbst ausgebildet, beispielsweise in Form von Kreuzgelenken. Grundsätzlich kommt aber auch eine allseitige Schwenklagerung mit Hilfe von Kugelgelenken mit dem Vorteil grösserer Einfachheit in Betracht.

Die Erfindung wird weiter anhand des in den Zeichnungen dargestellten Ausführungsbeispieles erläutert. Hierin zeigt:

Fig. 1 ein geometrisches Prinzipschema einer erfindungsgemässen Koppeleinrichtung für allseitige Relativbewegung der Drahtführungen gegeneinander und

Fig. 2 einen Längs- bzw. Vertikalschnitt einer entsprechenden Drahtführungseinrichtung in einer Schnittebene durch die Achsen der Drahtführungen und des Führungsgliedes.

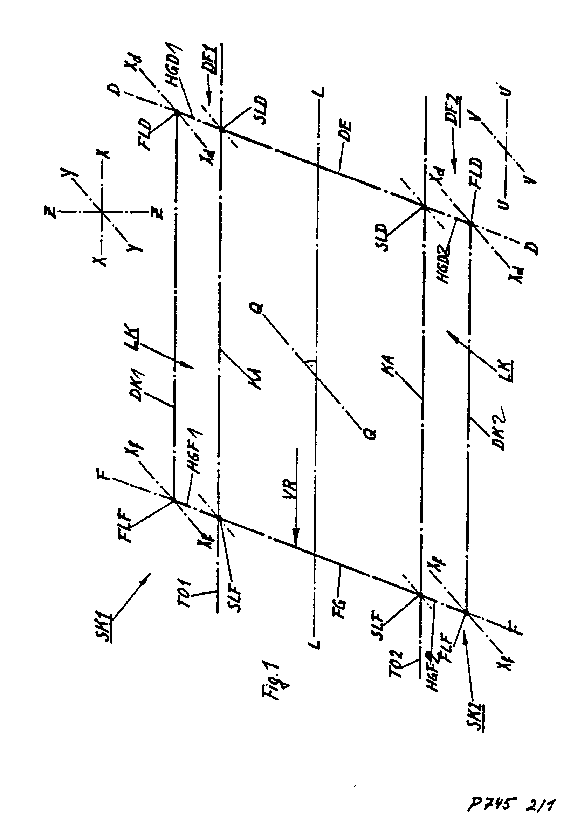

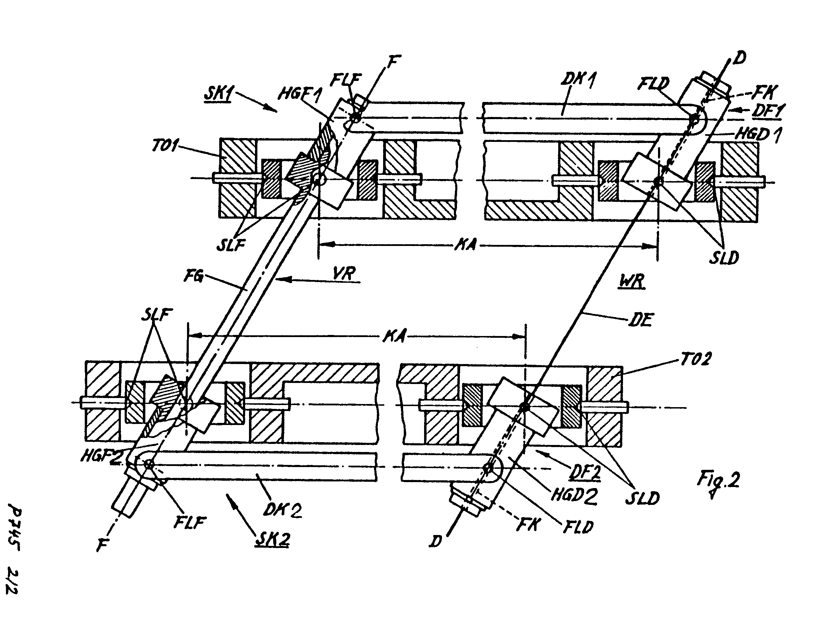

Innerhalb der langgestreckten und in Fig. 2 unterbrochen dargestellten Trägorgane TO1 und TO2 sind Drahtführungen DF1 und DF2 mittels kardanischer Schwenklager SLD allseitig schwenkbar gelagert. Zentrale Führungskanäle FK der Drahtführungen sind mit nichtdargestellten Führungsringen aus Hartwerkstoff versehen und leiten die Drahtelektrode DE durch den Werkstück-Bearbeitungsraum WR. Die Tragorgane TO1, TO2 und damit auch die Drahtführungen DF1, DF2 können in an sich bekannter und daher nicht dargestellter Weise relativ zueinander bzw. unabhängig voneinander oder auch gemeinsam miteinander im Sinne einer Vorschubbewegung relativ zum Werkstück gemäss den in Fig. 1 angedeuteten Koordinatenachse X-X, Y-Y bzw. U-U, V-V sowie auch in Richtung der Hochachse Z-Z verstellt und angetrieben werden. Die entsprechenden Stell- und Antriebsmittel gehören nicht zum Gegenstand der Erfindung und sind aus dem Stand der Technik bekannt, so dass nähere Erläuterungen entfallen.

Bei dieser Relativbewegung ist in an sich bekannter Weise durch die maschinenseitigen Führungen der Tragorgane sichergestellt, dass die Tragorgane zueinander in winkelfester Parallel-Lage verbleiben. Ansonsten können die Mittelpunkte der Drahtführungs-Schwenklager SLD beliebige Lagen im Raume relativ zueinander einnehmen, wobei die ideale Drahtführungsachse D-D entsprechende Winkellagen einnimmt. In Fig. 2 ist z. B. nur eine Relativverschiebung der Tragorgane in Horizontalrichtung und parallel zur Zeichnungsebene angedeutet. Entsprechende Verhältnisse gelten sinngemäss für eine Relativverschiebung in Richtung der Hochachse sowie in Richtung quer zur Zeichnungsebene.

Für die erstrebte, koaxiale Zwangseinstellung der Drahtführungen DF1, DF2 gemäss einer gemeinsamen Drahtführungsachse D-D ist in der aus Fig. 2 ersichtlichen Weise ein die beiden Tragorgane verbindendes, stabförmiges Führungsglied FG vorgesehen, welches in Pfeilrichtung VR gegen die Drahtführungen bzw. die Drahtelektrode DE horizontal versetzt angeordnet und somit ausserhalb des Werkstück-Bearbeitungsraumes WR angeordnet ist. Das Führungsglied FG ist in beiden Tragorganen mit Schwenklagern SLF, die in ihrem Aufbau den Drahtführungs-Schwenklagern SLD entsprechen, allseitig schwenkbar gelagert. Ausserdem ist das Führungsglied in der aus Fig. 2 ersichtlichen Weise in Bezug auf das Schwenklager SLF des unteren Tragorgans TO2 in seiner Längsrichtung, d.h. in Richtung der Führungsgliedachse F-F, verschiebbar gelagert. Damit wird beliebigen Relativbewegungen der Tragorgane gegeneinander unter Einhaltung ihrer Parallelstellung Rechnung getragen.

Wie aus Fig. 1 ersichtlich ist, sind die Koppelabschnitte KA der Tragorgane TO1 und TO2 zwischen den jeweils zugehörigen Schwenklagern SLD und SLF der Drahtführungen bzw. des Führungsgliedes übereinstimmend bemessen. Gleiches gilt für die wirksame Länge des Führungsgliedes zwischen den Schwenklagern SLF am Tragorgan TO1 bzw. TO2 in Bezug auf den Abstand der Drahtführungs-Schwenklager SLD. Somit ergibt sich geometrisch ein Gelenkparallelogramm, welches die Führungsgliedachse F-F stets parallel zur idealen Drahtführungsachse D-D hält. Das Führungsglied verkörpert daher bei beliebigen Relativstellungen der Drahtführungen jeweils die Soll-Winkellage der Drahtführungsachse D-D.

Die Übertragung dieser Soll-Winkellage auf die Drahtführungen erfolgt mittels Schwenk-Koppelgetrieben SK1 bzw. SK2, die den beiden Tragorganen zugeordnet sind. Bezüglich einer Schwenkbewegung des Führungsgliedes um die sich in der Versetzungsrichtung VR erstreckende Längsachse L-L erfolgt diese Schwenk-Koppelung mittels der aus Fig. 2 ersichtlichen Dreh-Koppelglieder DK1, DK2 die torsionssteif und an ihren Enden gabelförmig ausgebildet sowie hier durch Führungslager FLD bzw. FLF mit den Drahtführungen bzw. mit dem Führungsglied verbunden sind. Diese Führungslager sind als einachsige Schwenklager mit zur Parallelogrammebene gemäss den Achsen D-D und F-F rechtwinkligen Schwenkachsen Xd bzw. Xf ausgebildet. Infolgedessen wird die Schwenkbewegung des Führungsgliedes um die Achse L-L genau auf die Drahtführungen übertragen.

Für eine Schwenk-Koppelung um die rechtwinklig zur Achse L-L gerichtete Querachse Q-Q bilden die Schwenk-Koppelgetriebe SK1 und SK2 je ein Parallelogramm-Lenkergetriebe LK (siehe Fig. 1). Diese Lenkergetriebe werden geometrisch durch folgende Elemente gebildet:

a) ein Koppelabschnitt KA des Tragorgans zwischen den Schwenklagern SLD, SLF der Drahtführung DF1 einerseits und des Führungsgliedes FG andererseits;

b) ein sich parallel zur Drahtführungsachse D-D vom Schwenklagern SLD der Drahtführung DF1 zu einem auf der Drahtführungsachse D-D angeordneten Führungslager FLD erstreckendes und mit der Drahtführung DF1 schwenkfest verbundenes Hebelglied HGD1 bzw. HGD2;

c) ein sich parallel zur Längsachse F-F des Führungsgliedes FG vom Schwenklager SLF dieses Führungsgliedes zu einem auf dessen Längsachse F-F angeordneten Führungslager FLF erstreckendes und mit dem Führungsglied FG schwenkfest verbundenes Hebelglied HGF, das eine dem Drahtführungs-Hebelglied HGD1 bzw. HGD2 entsprechende Länge aufweist;

d) ein die Führungslager FLD, FLF des Drahtführungs-Hebelgliedes HGD1 bzw. HGD2 und des Führungsglied-Hebelgliedes HGF1 bzw. HGF2 miteinander verbindender Koppellenker DK1 bzw. DK2, der eine dem gegenüberliegenden Koppelabschnitt KA des Tragorgans TO1 entsprechende Länge aufweist.

Damit erfolgt also eine zweiachsige und somit vollständige Schwenk-Koppelung zwischen Führunsglied und Drahtführung, wobei das Dreh-Koppelglied DK1 bzw. DK2 eine Doppelfunktion einmal hinsichtlich der Schwenkung um L-L als Torsionsglied und zum anderen als Koppellenker innerhalb des zugehörigen Parallelogramm-Lenkergetriebes LK ausübt. Die Hebelglieder HGD1, HGD2 und HGF1, HGF2 sind im Beispiel gemäss Fig. 2 als bezüglich der Achsen D-D bzw. F-F drehbare Hülsen ausgebildet, was im Hinblick auf die Drehsteifheit der Kreuzgelenke um die Hochachse im Interesse der allseitigen Schwenkbarkeit erforderlich ist. Diese zusätzliche Drehlagerung kann bei Verwendung von Kugelgelenken entfallen.

## Patentansprüche

1. Drahtführungseinrichtung für elektroerosive Bearbeitungsmaschinen, bei der zwei Drahtführungen (DF1, DF2) an zugehörigen Tragorganen (TO1, TO2) in parallelen Ebenen relativ zueinander verfahrbar angeordnet sowie an den Tragorganen (TO1, TO2) allseitig schwenkbar gelagert sind, und mit einer Koppeleinrichtung, die die Drahtführungen (DF1, DF2) mit ihren Führungsachsen zueinander fluchtend einstellt, dadurch gekennzeichnet, dass die Koppeleinrichtung ein mit den Drahtführungen (DF1, DF2) verbundenes, entsprechend der Relativbewegung der Tragorgane (TO1, TO2) schwenkbares Lenker-Parallelogrammgetriebe (HGF1, DK1, HGD1, FG, HGF2, DK2, HGD2) mit einem Führungsglied (FG) aufweist, welches gegenüber den Drahtführungen (DF1, DF2) versetzt, an den Tragorganen (TO1, TO2) schwenkbar gelagert und mittels parallel zu den genannten Ebenen verlaufenden Koppellenkern (DK) mit den Drahtführungen (DF1, DF2) verbunden ist.

2. Drahtführungseinrichtung nach Anspruch 1, dadurch gekennzeichnet, dass das Führungsglied (FG) ausserhalb des Werkstück-Bearbeitungsraumes angeordnet ist.

3. Drahtführungseinrichtung nach einem der Ansprüche 1 und 2 dadurch gekennzeichnet, dass das Parallelogramm-Lenkergetriebe (LK) für die Schwenk-Koppelung zwischen Führungsglied (FG) und Drahtführung (DF1, DF2) um eine zur Versetzungsrichtung (VR) des Führungsgliedes (FG) gegenüber den Drahtführungen (DF1, DF2) wenigstens annähernd rechtwinklige Querachse (Q-Q) verschwenkbar ist.

4. Drahtführungseinrichtung nach einem der Ansprüche 1 bis 3, dadurch gekennzeichnet, dass das Parallelogramm-Lenkergetriebe (LK) folgende Elemente umfasst:

a) einen Koppelabschnitt (KA) des Tragorgans zwischen den Schwenklagern (SLD, SLF) der Drahtführung (DF1) einerseits und des Führungsgliedes (FG) andererseits;

b) ein sich parallel zur Drahtführungsachse (D-D) vom Schwenklager (SLD) der Drahtführung (DF1) zu einem auf der Drahtführungsachse (D-D) angeordneten Führungslager (FLD) erstreckendes und mit der Drahtführung (DF1) schwenkfest verbundenes Hebelglied (HGD);

c) ein sich parallel zur Längsachse (F-F) des Führungsgliedes (FG) vom Schwenklager (SLF) dieses Führungsgliedes zu einem auf dessen Längsachse (F-F) angeordneten Führungslager (FLF) erstreckendes und mit dem Führungsglied (FG) schwenkfest verbundenes Hebelglied (HGF), das eine dem Drahtführungs-Hebelglied (HGD) entsprechende Länge aufweist;

d) einen die Führungslager (FLD, FLF) des Drahtführungs-Hebelgliedes (HGD) und des Führungsglied-Hebelgliedes (HGP) miteinander verbindender Koppellenker (DK1, DK2), der eine dem gegenüberliegenden Koppelabschnitt (KA) des Tragorgans (TO1) entsprechende Länge aufweist.

5. Drahtführungseinrichtung nach den Anspruch 4 dadurch gekennzeichnet, dass die Führungslager (FLD, FLF) des Drahtführungs- und des Führungsglied-Hebelgliedes (HGD1, HGD2, HGF1, HGF2) als einachsige Schwenklager mit zur Ebene des Parallelogramm-Lenkergetriebes (LK) rechtwinklig angeordneter Gelenkachse (Xd-Xd bzw. Xf-Xf) ausgebildet und mit dem als Koppellenker wirkenden Dreh-Koppelglied (DK) in Richtung quer zu ihren Gelenkachsen drehfest verbunden sind.

6. Drahtführungseinrichtung nach einem der vorangehenden Ansprüche, dadurch gekennzeichnet, dass das Führungsglied (FG) teleskopartig ausgebildet oder mit mindestens einem der Drahtführungs-Tragorgane (TO1, TO2) in seiner Längsrichtung verschiebbar verbunden ist.

## Claims

1. Wire guiding device for electroerosion working machines having two wire guides (DF1, DF2) on corresponding support members (TO1, TO2) arranged in such a manner that they may be moved relative to each other on parallel planes and that they may be swivelled in all directions, and having a coupling device which mutually aligns the wire guides (DF1, DF2) with their guide axes, characterized in that the coupling device exhibits a parallelogram drive link mechanism (HGF1, DK1, HGD1, FG, HGF2, DK2, HGD2), connected to the wire guides (DF1, DF2) and pivotable in accordance with the relative movement of the support members (TO1, TO2), with a guide element (FG) which is offset with respect to the wire guides (DF1, DF2), mounted pivotably on the support members (TO1, TO2) and connected to the wire guides (DF1, DF2) by means of the coupling drive links (DK) extending parallel to the aforementioned planes.

2. Wire guiding device according to Claim 1, characterized in that the guide element (FG) is arranged outside the workpiece machining area.

3. Wire guiding device according to one of Claims 1 and 2, characterized in that the parallelogram drive link mechanism (LK) for the swivel coupling between guide element (FG) and wire guide (DF1, DF2) can be swivelled about a transverse axis (Q-Q) at least approximately at right angles to the displacement direction (VR) of the guide element (FG) with respect to the wire guides (DF1, DF2).

3. Wire guiding device according to one of the Claims 1 to 3, characterized in that the parallelogram drive link mechanism (LK) comprises the following elements:

a) A coupling section (KA) of the support member between the swivel bearings (SLD, SLF) of the wire guide (DF1) on the one hand and of the guide element (FG) on the other hand;

b) A lever element (HGD) connected non-pivotably to the wire guide (DF1) and extending parallel to the wire guide axis (D-D) from the swivel bearing (SLD) of the wire guide (DF1) to a guide bearing (FLD) arranged on the wire guide axis (D-D);

c) A lever element (HGF) connected non-pivotably to the guide element (FG) and extending parallel to the longitudinal axis (F-F) of the guide element (FG) from the swivel bearing (SLF) of this guide element to a guide bearing (FLF) arranged on the longitudinal axis (F-F) of the guide element, the length of which lever element corresponds to that of the wire guide lever element (HGD);

d) A coupling drive link (DK1, DK2) connecting the guide bearing (FLD, FLF) of the wire guide lever element (HGD) and the guide element lever element (HGF) to each other, the length of which coupling drive link corresponds to the opposite coupling section (KA) of the support member (TO1).

5. Wire guiding device according to Claim 4, characterized in that the guide bearings (FLD, FLF) of the wire guide lever element and the guide element lever element (HGD1, HGD2, HGF1, HGF2) are designed as single-axis swivel bearings with the pivot axis (Xd-Xd and Xf-Xf respectively) arranged at right angles to the plane of the parallelogram drive link mechanism (LK), and are connected torsion-proof transversely to their pivot axes to the rotatable coupling element (DK) acting as a coupling drive link.

6. Wire guiding device according to one of the preceding claims, characterized in that the guide element (FG) is designed to be telescopic or is connected displaceably in its longitudinal direction at least to one of the wire guide support members (TO1, TO2).

**Revendications**

1. Dispositif de guidage de fil pour machine d'usinage par électro-érosion dans lequel deux guide-fil (DF1, DF2) sont disposés sur des organes de support associés (TO1, TO2) de façon à pouvoir se déplacer en translation de manière relative l'un par rapport à l'autre dans des plans parallèles et sont aussi montés sur ces organes de support (T01, T02) de façon à pouvoir s'orienter dans tous les sens, ce dispositif de guidage comportant en outre un dispositif d'accouplement qui place les guide-fil (DF1, DF2) de manière alignée l'un avec l'autre par leurs axes de guidage, caractérisé en ce que ce dispositif d'accouplement comprend une tringlerie en parallélogramme à bras oscillant (HGF1, DK1, HGD1, FG, HGF2, DK2, HGD2) qui est reliée aux guide-fil (DF1, DF2) et peut s'orienter en fonction du déplacement relatif des organes de support (TO1, TO2) et qui comporte un organe de guidage (FG) qui est monte en position décalée par rapport aux guide-fil (DF1, DF2) et de façon à pouvoir s'orienter par rapport aux organes de support (TO1, TO2) et qui est relié aux guide-fil (DF1, DF2) au moyen de bras oscillants d'accouplement (DK) s'étendant parallèlement aux plans indiqués.

2. Dispositif de guidage de fil suivant la revendication 1, caractérisé en ce que l'organe de guidage (FG) est disposé à l'extérieur de l'espace nécessaire à l'usinage de la pièce.

3. Dispositif de guidage de fil suivant l'une des revendications 1 ou 2, caractérisé en ce que, en vue de l'accouplement d'orientation entre l'organe de guidage (FG) et le guide-fil (DF1, DF2), la tringlerie en parallélogramme à bras oscillants (LK) peut s'orienter autour d'un axe transversal (Q-Q) qui est au moins approximativement perpendiculaire à la direction de décalage (VR) de l'organe de guidage (FG) par rapport aux guide-fil (DF1, DF2).

4. Dispositif de guidage de fil suivant l'une des revendications 1 à 3, caractérisé en ce que la tringlerie à parallélogramme à bras oscillants (LK) englobe les éléments suivants:

a) un tronçon d'accouplement (KA) de l'organe de support, qui est situé entre les paliers d'orientation (SLD, SLF) du guide-fil (DF1), d'une part, et de l'organe de guidage (FG), d'autre part;

b) un organe formant levier (HGD) qui s'étend parallèlement à l'axe (D-D) des guide-fil, depuis le palier d'orientation (SLD) du guide-fil (DF1) jusqu'à un palier de guidage (FLD) disposé sur cet axe (D-D) des guide-fil, et qui est solidaire, en orientation du guide-fil (DF1);

c) un organe formant levier (HGF), qui s'étend parallèlement à l'axe longitudinal (F-F) de l'organe de guidage (FG) depuis le palier d'orientation (SLF) de cet organe de guidage jusqu'à un palier de guidage (FLF) disposé sur l'axe longitudinal (F-F) de ce dernier, et qui est solidaire, en orientation, de l'organe de guidage (FG) et offre une longueur correspondant à l'organe formant levier (HGD) du guide-fil;

d) un bras oscillant d'accouplement (DK1, DK2) qui relie entre eux les paliers de guidage (FLD, FLF) de l'organe formant levier (HGD) du guide-fil et l'organe formant levier (HGF) de l'organe de guidage et qui offre une longueur correspondant au tronçon d'accouplement (KA) de l'organe de support (TO1), qui lui fait face.

5. Dispositif de guidage de fil suivant la revendication 4, caractérisé en ce que les paliers de guidage (FLD, FLF) des organes formant levier (HGD1, HGD2, HGF1, HGF2) des guide-fil et de l'organe de guidage sont réalisés sous la forme de paliers d'orientation à axe unique, offrant des axes d'articulation (Xd-Xd ou Xf-Xf) disposés perpendiculairement au plan de la tringlerie en parallélogramme à bras oscillants (LK), et sont, suivant une direction perpendiculaire à leurs axes d'articulation, solidaires en rotation de l'organe d'accouplement en rotation (DK) servant de bras oscillant d'accouplement.

6. Dispositif de guidage de fil suivant l'une des revendications précédentes, caractérisé en ce que l'organe de guidage (FG) est réalisé de manière téléscopique ou est relié à au moins l'un des organes de support (TO1, TO2) des guide-fil de façon à pouvoir se déplacer en translation suivant sa direction longitudinale.

Fig. 1

Fig. 2

P745 2/2